# EUROPEAN PATENT SPECIFICATION

(11) **EP 2 388 160 B1**
(45) Date of publication and mention of the grant of the patent: **31.10.2012**
(21) Application number: 10162941.8
(22) Date of filing: 17.05.2010
(51) Int. Cl.: B60K 31/00, G08G 1/16

(54) **Motor vehicle distance information system and method**
Distanzinformationssystem und -verfahren für Motorfahrzeuge
Système et procédé d'informations de distance de véhicule à moteur

(43) Date of publication of application: 23.11.2011
(73) Proprietor: Volvo Car Corporation, 405 31 Göteborg (SE)
(72) Inventor: Agnvall, Anders, 43738 Lindome (SE); Nilsson, Magnus, 41455, Göteborg (SE); Magnusson, Martin, 44231, Kungälv (SE); Lind, Henrik, 42339, Torslanda (SE)
(74) Representative: Widahl, Jenny Marie

(56) References cited:
- DE-A1-102007 050 962
- US-A1- 2002 105 418
- US-A1- 2003 120 414
- US-B1- 6 188 950
- US-B1- 6 496 108

## Description

### Technical field

The present invention relates to a motor vehicle distance information system, in accordance with the preamble of claim 1. The present invention also relates to a method for providing distance information in a motor vehicle, in accordance with the preamble of claim 10.

### Background of the invention

When driving a vehicle it may be perceived as difficult for the driver of the vehicle to keep a desired distance to a vehicle in front.

Hitherto, various systems for assisting the driver of a vehicle in keeping a desired distance to a vehicle in front have been proposed. Almost all of the proposed devices rely on a measurement of the distance to the vehicle ahead. This measurement is usually performed by Adaptive Cruise Control (ACC) sensors, such as radar based sensors, laser based sensors or camera based sensors.

This functionality is usually implemented such that a visual indicator lights up whenever a time gap to a vehicle in front falls below a certain threshold. Normally this indicator is either switched on or off depending on whether the vehicle in front is within a future path of the subject vehicle defined by a chosen time gap. In such a setup, the length of the future path equals the chosen time gap multiplied with the speed of the host vehicle.

One such system is previously known through US6014601, which relates to a driver alert system where a laser transmitter is configured to transmit a laser beam at an object, and a laser receiver is configured to receive a reflection of the laser beam. A speed sensor is connected to a vehicle speedometer system and receives vehicle speed information from the vehicle speedometer system. A processing unit receives laser pulse data from the laser receiver and road condition data from a road condition switch, and the vehicle speed information from the speed sensor. The processing unit calculates a relative speed of the object with respect to the vehicle, a distance from the object to the vehicle, and a relative acceleration of the object with respect to the vehicle. The processing unit further calculates a safe following distance based on the road condition data and the vehicle speed information, and compares the safe following distance to the actual distance from the object to the vehicle. The processing unit further calculates a collision time based on the relative speed of the object, the distance from the object to the vehicle, and the relative acceleration of the object. The collision time is displayed on a collision time display. A linear light display indicates the relative level of safety or danger based on following distance and collision time, i.e. the linear light display indicates the relative level of safety or danger of approach. The system factors in relative change in speed when determining whether a driver is approaching an object too quickly for safety. Although described for a laser system it is indicated that it may be easily adapted to a radar system. The display of the lamps is graduated based on the urgency of the alarm condition. For example, when the system is first turned on, only a first light is illuminated, indicating a safe condition. As the level of the alarm becomes more urgent, the number of lamps illuminated increases toward the last lamp of the linear display.

A further such system is known through GB2286307, which relates to an alarm device or devices, which when fitted to a travelling vehicle may warn the driver, by visual alarm signals, of the distance of other vehicles located in front of the said vehicle. The device may incorporate single range, or combined range sensors set to predetermined distances, or zones, which may activate visual alarm signals. These sensors may contain manual override switches to allow them to be switched on, or off, to suit various driving conditions. The warning lights may be in different colours to identify the various distance zones. The distance alarm device may produce the following visual alarms for the driver of the vehicle. When the long distance sensor alarm contacts a vehicle in front a green light illuminates or flashes in front of the driver. If the distance reduces, the green light remains on until the middle distance sensor beam contacts the other vehicle. An amber light then illuminates or flashes and the green light goes off. If the distance reduces again the amber light remains on until the short distance sensor contacts the other vehicle. A red light then illuminates and flashes and the amber light goes off.

A yet further system is known through GB2260209, which relates to a breaking distance indicating and warning device. The device is mounted in an automobile vehicle and includes a signal emitting device, and a detector for detecting a reflected signal from a preceding vehicle. A device computes the distance of the preceding vehicle which is compared with braking distance computed with reference to own vehicle speed, road state, and other data. If braking distance is greater than the distance of the preceding vehicle, then an alarm signal is generated. Alarms may be visual displays. A continuous display may be provided in analog or digital form. It is preferred that the warnings should begin with low intensity indications when the braking distance begins to exceed vehicle distance, intensifying as the separation narrows, and becoming strident before any action is taken to intervene in the control of the vehicle.

However, although the previously known devices provides a distance alert support functionality the alerts provided thereby are sensitive to distance measurement noise and also to deviations in the distance caused by the longitudinal control of the driver of the host vehicle.

### Summary of the invention

Thus, it is an object of the invention to provide a motor vehicle distance information system with an improved ability to handle distance measurement noise and deviations caused by longitudinal control of a host vehicle.

This object is achieved by means of a motor vehicle distance information system having the characteristics of claim 1.

The above object is achieved thanks to the provision of at least one sensor for measuring a separation distance between said host vehicle and a vehicle ahead; a logic, arranged to process information acquired by said at least one sensor and calculate a separation distance threshold; at least one visual indicator, arranged to be activated to indicate if said separation distance falls below said calculated separation distance threshold, where said logic further is arranged to apply a hysteresis to said separation distance threshold such that when said separation distance is increasing said separation distance threshold is shifted by said hysteresis to a larger separation distance and when said separation distance is decreasing said separation distance threshold is shifted by said hysteresis to a smaller separation distance.

A further object of the present invention is to provide a method for providing distance information in a motor vehicle which improves the ability to handle distance measurement noise and deviations caused by longitudinal control of a host vehicle.

This object is achieved by means of a method for providing distance information in a motor vehicle having the characteristics of claim 10.

Thanks to the method comprising the steps of: arranging at least one sensor to measure a separation distance between said host vehicle and a vehicle ahead; arranging a logic to process information acquired by said at least one sensor and calculate a separation distance threshold; providing at least one visual indicator, to indicate if said separation distance falls below said calculated separation distance threshold; arranging said logic to apply a hysteresis such that when said separation distance is increasing said separation distance threshold is shifted by said hysteresis to a larger separation distance and when said separation distance is decreasing said separation distance threshold is shifted by said hysteresis to a smaller separation distance.

Preferred embodiments are listed in the dependent claims.

### Description of drawings

In the following, the invention will be described in greater detail by way of example only with reference to attached drawings, in which
Fig. 1 shows schematically a system overview for a motor vehicle distance information system in accordance with the present invention;
Fig. 2 illustrates schematically the behavior of the ramp-up/down and the hysteresis in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

In overview, the present invention relates to a distance information system that in a non-annoying manner helps a driver of a host vehicle 1 keep the separation distance 3 to a vehicle ahead 2.

In accordance with the present invention, a distance alert lights up as a visual indicator 9 e.g. in a head-up display, whenever the separation distance 3 to the vehicle in front 2 is below a certain separation distance threshold. The separation distance threshold may be determined as a predetermined time gap to the vehicle in front 2 at a current speed of the host vehicle 1.

Alternatively, an alert may be provided as a force-feedback in the accelerator pedal of the vehicle 1, i.e. requiring an increased force for pressing down the accelerator pedal during an alert. One may of course combine a visual alert with such a force-feedback alert.

The driver of the host vehicle 1 may be provided with the ability to choose among a plurality of different pre-defined separation distance threshold settings to match his or her driving style, e.g. settings corresponding to predetermined time gaps of 0.7, 1.1, 1.5, 1.9 and 2.3 seconds.

Measurement of the separation distance 3 to the vehicle ahead 2 may be performed by an Adaptive Cruise Control sensor 8, such as e.g. a radar, laser or camera device.

The indicator 9 should be arranged to be switched on or off depending on whether the vehicle in front 2 is within a future path of the host vehicle 1 defined by a chosen separation distance threshold, e.g. as defined by a predetermined time gap to the vehicle in front 2 at a current speed of the host vehicle.

In order to provide improved ability to handle separation distance 3 measurement noise and deviations caused by longitudinal control of the host vehicle 1 a hysteresis 6 may be applied to the separation distance threshold such that a condition for activating an alert involves a slightly lower separation distance then that of de-activating an alert.

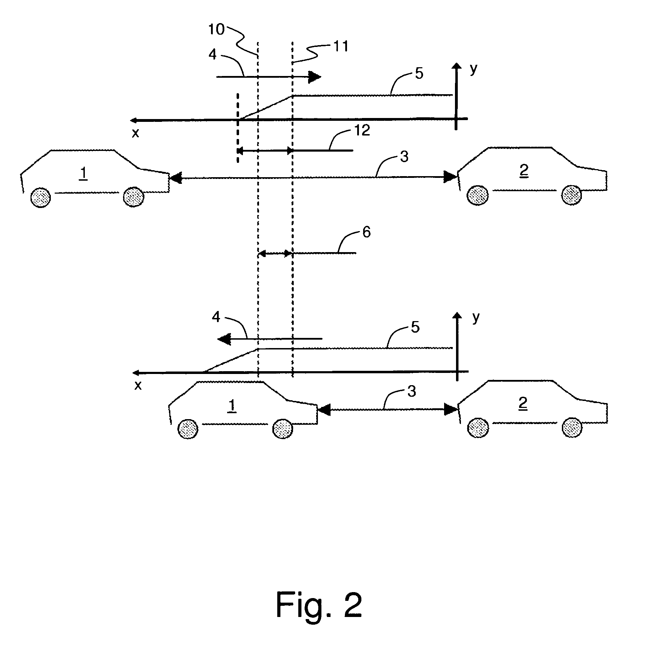

The intensity of the alert may be arranged such that the alert is ramped up/down, e.g. using a ramp having a predetermined width 12. This provides a more gentle and non intrusive behavior of the visual alert. The above hysteresis 6 may be applied to the ramp-up/down activation/de-activation of the alert. As illustrated in Figure 2, when the separation distance 3 increases, lowermost scenario, ramp-down may start at a larger separation distance 10 than the separation distance 11 where ramp-up ends when the separation distance 3 is decreasing, uppermost scenario. As an example, the magnitude of the hysteresis may be such that the difference 6 between the separation distances 10 and 11 may correspond to a time gap of 0.1 seconds.

As an alternative to the ramp functionality, or combined therewith, it is envisaged to have the visual alert change colour, e.g. from green to yellow and on to red, as an indication of the urgency of the alert, e.g. in a manner corresponding to the ramp up/down functionality described above.

A control logic 7 of the system may be provided with a rule that prohibits the issuance of an alert should a faster vehicle 2 cut in front and drive away, i.e. should a vehicle 2 driving considerably faster than the host vehicle 1 cut in in front and disappear quickly. The rule may be arranged to use a threshold in relative velocity. The alert may be disabled for a specific vehicle 2 until the relative velocity has once again fallen below the relative velocity threshold value, e.g. 2 m/s. Once this has occurred the alert stays active as long as that specific vehicle 2 remains the closest vehicle in front of the host vehicle 1.

A further rule may be provided to prohibit alert if a faster vehicle 2 cuts in at a distance close to where the alert would normally switch off. The later rule will prohibit the alert from being activated unnecessarily, for a very short period of time, which causes system flicker and may be perceived as an annoyance by the driver of the host vehicle 1. This rule may be arranged to use the current distance and relative speed between the host vehicle 1 and the vehicle ahead 2 to predict the time until the vehicle ahead 2 will leave the distance alert area. Should this predicted time fall below a certain time threshold, e.g. 2.5 seconds, the activation of the alert is prohibited in order to avoid a very short activation of the alert.

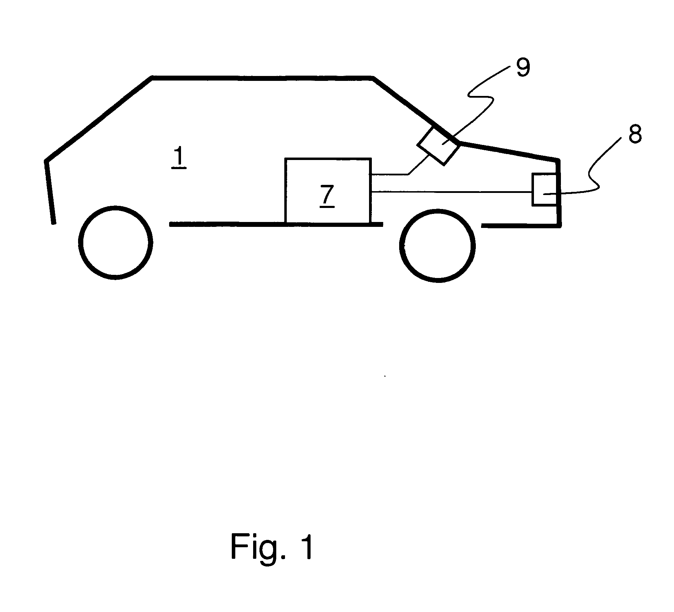

In figure 1 is shown schematically a system overview for the motor vehicle distance information system in accordance with the present invention. The system comprises at least one sensor 8, such as a radar based sensor, a laser based sensor or a camera based sensor, for measuring the separation distance 3 between the host vehicle 1 and a vehicle ahead 2. A logic 7 is arranged to process information acquired by the at least one sensor 8 and calculate a separation distance threshold. The logic 7 may also be arranged to take into account further vehicle data, such as the host vehicle 1 speed and any input pre-defined separation distance threshold settings, when calculating the separation distance threshold. At least one visual indicator 9 is arranged to be activated to indicate if the separation distance 3 between the host vehicle 1 and the vehicle ahead 2 falls below the calculated separation distance threshold. The logic 7 is further arranged to apply a hysteresis 6 to the separation distance threshold, such that when the separation distance 3 is increasing the separation distance threshold is shifted by the hysteresis 6 to a larger separation distance 10 and when the separation distance 3 is decreasing the separation distance threshold is shifted by the hysteresis 6 to a smaller separation distance 11.

In accordance with a further embodiment the logic 7 is further arranged such that a separation distance threshold for activating the visual indicator 9 involves a slightly lower separation distance then a threshold for de-activating the visual indicator 9.

In a still further embodiment the logic 7 is further arranged such that the intensity of the visual indicator 9 is ramped up from a separation distance corresponding to the width of the selected ramp 12 before the separation distance threshold when activated and ramped down to a separation distance corresponding to the width of the selected ramp 12 after the separation distance threshold when de-activated.

In a yet further embodiment the logic 7 is further arranged such that the visual indicator 9 will change colour for indicating activation thereof. Alternatively, the logic 7 is arranged such that the visual indicator 9 will change through two or more colours for indicating a degree of activation thereof, e.g. in a manner essentially corresponding to the ramp up/down of intensity as described above.

In an additional embodiment the logic 7 is further arranged such that the activation of an alert is inhibited should an ahead vehicle 2 cut in in front of the host vehicle 1 and the separation distance 3 is increasing at a rate that exceeds a predefined rate threshold, e.g. 2 m/s. Further, the logic 7 may in still a further embodiment be arranged such that the activation of an alert is inhibited should a faster ahead vehicle 2 cut in close to a distance where the alert would normally be de-activated.

In a still further embodiment at least one tactile indicator, such as a force feedback in the accelerator pedal of the host vehicle 1, is arranged to be activated together with the at least one visual indicator 9.

Figure 2 illustrates schematically the behavior of the ramp-up/down and the hysteresis 6, where the x-axis is the distance axis and the y-axis is the alert intensity. When the host vehicle 1 is closing in on the vehicle ahead 2, uppermost scenario, the intensity of the visual alert is ramped up. The ramp begins at a certain distance corresponding to the separation distance 11 plus the width of the ramp 12 and reaches full intensity at the separation distance 11. When the separation distance 3 is increasing, lowermost scenario, the start and end of the ramp are shifted to slightly larger distances by the hysteresis 6. As an example, the width of the ramp 12 may correspond to a time gap of 0.3 seconds.

The present invention also relates to a motor vehicle 3, which comprises a motor vehicle distance information system as described above.

The present invention further relates to a method for providing distance information in a motor vehicle 1, which comprises the steps of: arranging at least one sensor 8 to measure a separation distance 3 between the host vehicle 1 and a vehicle ahead 2; arranging a logic 7 to process information acquired by the at least one sensor 8 and calculate a separation distance threshold; providing at least one visual indicator 9, to indicate if the separation distance 3 between the host vehicle 1 and the vehicle ahead 2 falls below the calculated separation distance threshold; arranging the logic 7 to apply a hysteresis 6 such that when the separation distance 3 is increasing the separation distance threshold is shifted by the hysteresis 6 to a larger separation distance 10 and when the separation distance 3 is decreasing the separation distance threshold is shifted by the hysteresis 6 to a smaller separation distance 11.

Thus, in accordance with the present invention is provided a system and method which provides for a stable alert functionality with a reduced sensibility for disturbances in the distance measurement and/or minor alterations in distance. The system and method in accordance with the present invention is only intended to provide information for assisting the driver of a vehicle, and is not as such intended to be an autonomous safety system.

It is of course envisaged that the above invention be implemented such that any applicable legal requirements are fulfilled.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. Motor vehicle (1) distance information system comprising: at least one sensor (8) for measuring a separation distance (3) between said host vehicle (1) and a vehicle ahead (2); a logic (7), arranged to process information acquired by said at least one sensor (8) and calculate a separation distance threshold; at least one visual indicator (9), arranged to be activated to indicate if said separation distance (3) falls below said calculated separation distance threshold, **characterized in that** said logic (7) further is arranged to apply a hysteresis (6) to said separation distance threshold such that when said separation distance (3) is increasing said separation distance threshold is shifted by said hysteresis (6) to a larger separation distance (10) and when said separation distance (3) is decreasing said separation distance threshold is shifted by said hysteresis (6) to a smaller separation distance (11).

2. System according to claim 1, **characterized in that** said logic (7) further is arranged such that a separation distance threshold for activating said visual indicator (9) involves a slightly lower separation distance than a threshold for de-activating said visual indicator (9).

3. System according to any one of claims 1 or 2, **characterized in that** said logic (7) further is arranged such that the intensity of said visual indicator (9) is ramped up from a separation distance corresponding to a width of a selected ramp (12) before the separation distance threshold when activated and ramped down to a separation distance corresponding to a width of a selected ramp (12) after the separation distance threshold when de-activated.

4. System according to any one of claims 1 or 2, **characterized in that** said logic (7) further is arranged such that said visual indicator (9) will change colour for indicating activation thereof.

5. System according to claim 4, **characterized in that** said logic (7) further is arranged such that said visual indicator (9) will change through two or more colours for indicating a degree of activation thereof.

6. System according to any one of claims 1 to 5, **characterized in that** said logic (7) further is arranged such that the activation of an alert is inhibited should an ahead vehicle (2) cut in in front of the host vehicle (1) and said separation distance (3) is increasing at a rate that exceeds a predefined rate threshold.

7. System according to any one of claims 1 to 6, **characterized in that** said logic (7) further is arranged such that that the activation of an alert is inhibited should a faster ahead vehicle (2) cut in close to a distance corresponding to a separation distance where the alert would normally be de-activated.

8. System according to any one of claims 1 to 7, **characterized in that** at least one tactile indicator, such as a force feedback in the accelerator pedal of the host vehicle (1), is arranged to be activated together with the at least one visual indicator (9).

9. A motor vehicle (1), **characterized in that** it comprises a motor vehicle (1) distance information system according to any one of claims 1 to 7.

10. Method for providing distance information in a motor vehicle (1), **characterized in that** it comprises the steps of:
arranging at least at least one sensor (9) to measure a separation distance (3) between said host vehicle (1) and a vehicle ahead (2);
arranging a logic (7) to process information acquired by said at least one sensor (8) and calculate a separation distance threshold;
providing at least one visual indicator (9), to indicate if said separation distance (3) falls below said calculated separation distance threshold;
arranging said logic (7) to apply a hysteresis (6) such that when said separation distance (3) is increasing the separation distance threshold is shifted by said hysteresis (6) to a larger separation distance (10) and when said separation distance (3) is decreasing said separation distance threshold is shifted by said hysteresis (6) to a smaller separation distance (11).

## Patentansprüche

1. Abstandsinformationssystem für ein Kraftfahrzeug (1), Folgendes umfassend: mindestens einen Sensor (8) zum Messen eines Trennungsabstandes (3) zwischen dem Ausgangsfahrzeug (1) und einem voraus befindlichen Fahrzeug (2), eine Logik (7), die dafür angeordnet ist, Informationen zu verarbeiten, die von dem mindestens einen Sensor (8) erfasst wurden, und einen Trennungsabstands-Grenzwert zu berechnen, mindestens eine optische Anzeige (9), die dafür angeordnet ist, aktiviert zu werden, um anzuzeigen wenn der Trennungsabstand (3) unter den berechneten Trennungsabstands-Grenzwert sinkt, **dadurch gekennzeichnet, dass** die Logik (7) ferner dafür angeordnet ist, eine Hysterese (6) derart in den Trennungsabstands-Grenzwert einzubringen, dass bei zunehmendem Trennungsabstand (3) der Trennungsabstands-Grenzwert durch die Hysterese (6) auf einen größeren Trennungsabstand (10) angehoben wird und bei abnehmendem Trennungsabstand (3) der Trennungsabstands-Grenzwert durch die Hysterese (6) auf einen geringeren Trennungsabstand (11) gesenkt wird.

2. System nach Anspruch 1, **dadurch gekennzeichnet, dass** die Logik (7) ferner derart angeordnet ist, dass ein Trennungsabstands-Grenzwert zum Aktivieren der optischen Anzeige (9) einen Trennungsabstand beinhaltet, der etwas kleiner als ein Grenzwert zum Deaktivieren der optischen Anzeige (9) ist.

3. System nach einem der Ansprüche 1 oder 2, **dadurch gekennzeichnet, dass** die Logik (7) ferner derart angeordnet ist, dass die Intensität der optischen Anzeige (9) bei Aktivierung von einem Trennungsabstand an erhöht wird, der einer Breite einer ausgewählten Rampe (12) vor dem Trennungsabstands-Grenzwert entspricht, und bei Deaktivierung bis zu einem Trennungsabstand vermindert wird, der einer Breite einer ausgewählten Rampe (12) nach dem Trennungsabstands-Grenzwert entspricht.

4. System nach einem der Ansprüche 1 oder 2, **dadurch gekennzeichnet, dass** die Logik (7) ferner derart angeordnet ist, dass die optische Anzeige (9) zum Anzeigen ihrer Aktivierung die Farbe ändert.

5. System nach Anspruch 4, **dadurch gekennzeichnet, dass** die Logik (7) ferner derart angeordnet ist, dass die optische Anzeige (9) zwischen zwei oder mehr Farben wechselt, um einen Grad ihrer Aktivierung anzuzeigen.

6. System nach einem der Ansprüche 1 bis 5, **dadurch gekennzeichnet, dass** die Logik (7) ferner derart angeordnet ist, dass die Aktivierung eines Alarms verhindert wird, wenn ein voraus befindliches Fahrzeug (2) vor dem Ausgangsfahrzeug (1) einschert und sich der Trennungsabstand (3) mit einer Geschwindigkeit vergrößert, die einen zuvor festgelegten Grenzwert für die Geschwindigkeit übersteigt.

7. System nach einem der Ansprüche 1 bis 6, **dadurch gekennzeichnet, dass** die Logik (7) ferner derart angeordnet ist, dass die Aktivierung eines Alarms verhindert wird, wenn ein schneller vorausfahrendes Fahrzeug (2) nahezu in einem Abstand einschert, der einem Trennungsabstand entspricht, bei dem der Alarm normalerweise deaktiviert würde.

8. System nach einem der Ansprüche 1 bis 7, **dadurch gekennzeichnet, dass** mindestens eine haptische Anzeige, wie beispielsweise eine Kraftrückmeldung im Gaspedal des Ausgangsfahrzeugs (1), dafür angeordnet ist, zusammen mit der mindestens einen visuellen Anzeige (9) aktiviert zu werden.

9. Kraftfahrzeug (1), **dadurch gekennzeichnet, dass** es ein Abstandsinformationssystem für ein Kraftfahrzeug (1) nach einem der Ansprüche 1 bis 7 umfasst.

10. Verfahren zum Bereitstellen eines Abstandsinformationssystems in einem Kraftfahrzeug (1), **dadurch gekennzeichnet, dass** es folgende Schritte umfasst:
Anordnen mindestens eines Sensors (9), um einen Trennungsabstand (3) zwischen dem Ausgangsfahrzeug (1) und einem voraus befindlichen Fahrzeug (2) zu messen,
Anordnen einer Logik (7), um Informationen zu verarbeiten, die von dem mindestens einen Sensor (8) erfasst wurden, und einen Trennungsabstands-Grenzwert zu berechnen,
Bereitstellen mindestens einer optischen Anzeige (9), um anzuzeigen, wenn der Trennungsabstand (3) unter den berechneten Trennungsabstands-Grenzwert sinkt,
Anordnen der Logik (7), um eine Hysterese (6) derart einzubringen, dass bei zunehmendem Trennungsabstand (3) der Trennungsabstands-Grenzwert durch die Hysterese (6) auf einen größeren Trennungsabstand (10) angehoben wird und bei abnehmendem Trennungsabstand (3) der Trennungsabstands-Grenzwert durch die Hysterese (6) auf einen geringeren Trennungsabstand (11) gesenkt wird.

## Revendications

1. Système d'informations de distance de véhicule à moteur (1) comprenant : au moins un capteur (8) servant à mesurer une distance de séparation (3) entre ledit véhicule hôte (1) et un véhicule (2) placé devant ; un élément logique (7), conçu pour traiter les informations acquises par ledit au moins un capteur (8) et calculer un seuil de distance de séparation ; au moins un indicateur visuel (9), conçu pour être activé pour indiquer si ladite distance de séparation (3) passe en dessous dudit seuil de distance de séparation calculé, **caractérisé en ce que** ledit élément logique (7) est en sus conçu pour appliquer une hystérèse (6) audit seuil de distance de séparation de telle sorte que lorsque ladite distance de séparation (3) augmente, ledit seuil de distance de séparation est décalé par ladite hystérèse (6) pour atteindre une distance de séparation (10) plus importante et que lorsque ladite distance de séparation (3) diminue, ledit seuil de distance de séparation est décalé par ladite hystérèse (6) pour atteindre une distance de séparation (11) plus petite.

2. Système selon la revendication 1, **caractérisé en ce que** ledit élément logique (7) est en sus conçu de telle sorte qu'un seuil de distance de séparation servant à activer ledit indicateur visuel (9) implique une distance de séparation légèrement inférieure à un seuil de désactivation dudit indicateur visuel (9).

3. Système selon l'une quelconque des revendications 1 ou 2, **caractérisé en ce que** ledit élément logique (7) est en sus conçu de telle sorte que l'intensité dudit indicateur visuel (9) est augmentée à partir d'une distance de séparation correspondant à une largeur d'une rampe (12) sélectionnée avant l'activation du seuil de distance de séparation et réduite à une distance de séparation correspondant à une largeur d'une rampe (12) sélectionnée après désactivation du seuil de distance de séparation.

4. Système selon l'une quelconque des revendications 1 ou 2, **caractérisé en ce que** ledit élément logique (7) est en sus conçu de telle sorte que ledit indicateur visuel (9) change de couleur pour indiquer son activation.

5. Système selon la revendication 4, **caractérisé en ce que** ledit élément logique (7) est en sus conçu de telle sorte que ledit indicateur visuel (9) change de couleur en passant par deux couleurs ou plus pour indiquer son degré d'activation.

6. Système selon l'une quelconque des revendications 1 à 5, **caractérisé en ce que** ledit élément logique (7) est en sus conçu de telle sorte que l'activation d'une alerte est bloquée si un véhicule (2) placé devant se rabat devant le véhicule hôte (1) et que ladite distance de séparation (3) augmente à une vitesse dépassant un seuil de vitesse prédéfini.

7. Système selon l'une quelconque des revendications 1 à 6, **caractérisé en ce que** ledit élément logique (7) est en sus conçu de telle sorte que l'activation d'une alerte est bloquée si un véhicule (2) placé devant plus rapide se rabat à proximité d'une distance correspondant à une distance de séparation à laquelle l'alerte serait normalement désactivée.

8. Système selon l'une quelconque des revendications 1 à 7, **caractérisé en ce qu'**au moins un indicateur tactile, tel qu'une force de rappel exercée dans la pédale d'accélérateur du véhicule hôte (1), est conçu pour être activé conjointement avec l'au moins un indicateur visuel (9).

9. Véhicule à moteur (1), **caractérisé en ce qu'**il comprend un système d'informations de distance de véhicule à moteur (1) selon l'une quelconque des revendications 1 à 7.

10. Procédé permettant de fournir des informations de distance dans un véhicule à moteur (1), **caractérisé en ce qu'**il comprend les étapes consistant à :
disposer au moins un capteur (9) permettant de mesurer une distance de séparation (3) entre ledit véhicule hôte (1) et un véhicule (2) placé devant ;
disposer un élément logique (7) servant à traiter les informations acquises par ledit au moins un capteur (8) et calculer un seuil de distance de séparation ;
fournir au moins un indicateur visuel (9), pour indiquer si ladite distance de séparation (3) passe en dessous dudit seuil de distance de séparation calculé ;
disposer ledit élément logique (7) servant à appliquer une hystérèse (6) de telle sorte que lorsque ladite distance de séparation (3) augmente, le seuil de distance de séparation est décalé par ladite hystérèse (6) pour atteindre une distance de séparation (10) plus importante et que lorsque ladite distance de séparation (3) diminue, ledit seuil de distance de séparation est décalé par ladite hystérèse (6) pour atteindre une distance de séparation (11) plus petite.
